# EUROPEAN PATENT SPECIFICATION

(11) **EP 3 107 778 B1**
(45) Date of publication and mention of the grant of the patent: **02.01.2019**
(21) Application number: 15751905.9
(22) Date of filing: 16.02.2015
(51) Int. Cl.: F16D 57/04, B60T 10/02, B60T 1/087

(54) **HYDRODYNAMIC RETARDER DEVICE, METHOD FOR ITS USE AND VEHICLE**
HYDRODYNAMISCHER RETARDER, VERFAHREN ZU DESSEN VERWENDUNG UND FAHRZEUG
DISPOSITIF RALENTISSEUR HYDRODYNAMIQUE, PROCÉDÉ POUR SON UTILISATION ET VÉHICULE

(30) Priority: 19.02.2014 SE 1450192
(43) Date of publication of application: 28.12.2016
(73) Proprietor: Scania CV AB, 151 87 Södertälje (SE)
(72) Inventor: SANNELIUS, Mikael, S-125 33 Älvsjö (SE)
(74) Representative: Scania CV AB
(86) International application number: PCT/SE2015/050178
(87) International publication number: WO 2015/126314

(56) References cited:
- EP-A1- 2 543 567
- EP-A2- 1 251 050
- EP-A2- 1 251 050
- EP-A2- 2 006 564
- EP-A2- 2 006 564
- DE-A1-102009 016 817
- DE-A1-102010 010 222
- US-A- 2 287 130
- US-A1- 2004 238 301
- US-A1- 2005 269 177
- US-A1- 2009 113 886

## Description

### Field of the invention

The present invention relates to a hydrodynamic retarder device for a vehicle, comprising at least one shovel head stator in order to, jointly with at least one shovel head rotor, form a shovel system with a workspace for reception of an aqueous working medium, and a retarder circuit connected to the workspace, in order to control the supply of the working medium to the workspace. The invention also relates to a method for operation of a hydrodynamic retarder device, and a vehicle equipped with a hydrodynamic retarder device. EP2543567 A1 describes how to limit a pressure drop to avoid reacing vapour pressure. This document does not mention the use of a negative pressure generator.

### Background of the invention

In order to increase the driving efficiency and safety, and to reduce wear of the wheel brakes, primarily heavy goods vehicles are, according to prior art, equipped with retarder devices. A retarder device is a hydrodynamic auxiliary brake, which brakes the car's power-train with the help of the resistance exercised by a shovel system, operating an amount of liquid in a workspace. In operation, braking energy absorbed by the retarder device transitions into heat energy in the liquid, which in turn is cooled down by a cooling system in the vehicle.

The braking torque is controlled through control of a pressure prevailing in the workspace between the shovel blades belonging partly to the retarder device's stator, and partly to its rotor. When the retarder device is not used, the workspace is essentially depressurised. However, a certain drag loss is created in the retarder device, if it rotates with the power-train. From a fuel-saving perspective it is important to keep this drag loss as small as possible.

A method to avoid the drag loss is to mechanically disconnect the retarder device from the power-train when it is not used. This is possible with the help of a coupling, such as a synchronising clutch or a multi-plate clutch. When the retarder device then is to be connected to be used for braking, the retarder device's rotor has to be accelerated quickly, and synchronised with the power-train's engine speed. This must happen within fractions of a second, and the acceleration torque produced must be minimised, in order to avoid uncomfortable jerks to be generated in the vehicle.

In a retarder device using oil as a working medium, this is fully possible thanks to a low acceleration resistance, which is achieved since the shovel system is filled with air instead of oil during this acceleration phase.

In order to minimise the number of components and systems in the vehicle, it is advantageous if the vehicle's ordinary coolant, which typically contains a mixture of water and glycol, may be used as a working medium. A retarder device applying this principle is called a water retarder.

In a water retarder, however, it is problematic to aerate the shovel system during acceleration, since air that comes into contact with the coolant may partly follow the latter, and have an adverse impact on other components in the vehicle, with which the coolant comes into contact. For this reason, water retarders are operated in a partly water filled state even when they are disconnected, entailing a relatively high acceleration torque.

For this reason, more complex connecting components are required and uncomfortable jerks may nevertheless to some extent still arise in the vehicle at connection.

As examples of the technology's background, US2287130, US2006090971, WO2010034493, US2007102251 and DE10054078 may be mentioned.

### The objective and primary characteristics of the invention

It is an objective of the present invention to provide a hydrodynamic retarder device according to the above, and a method, with which the problems with the background technology are addressed and at least alleviated. This is achieved in an arrangement of the type mentioned above by way of: the retarder device being arranged to ensure that the pressure in the workspace is reduced to or below the vapour pressure for the working medium, in order to vacate the workspace of liquid working medium before a disconnection of the retarder device from the power-train, by initiating a valve element arranged in the retarder circuit to shut off the flow of the working medium to the workspace, while allowing for an outflow therefrom during a first time period when the retarder device is connected to the power-train with the rotor in rotation, and to subsequently activate a negative pressure generator connected to the workspace during the rotor's continued rotation, to keep the valve element closed and the workspace in an evacuated state during a second time period, when the retarder device is disconnected from the power-train and during a subsequent, third time period for connection of the retarder device to the power-train, for subsequent braking operation.

The negative pressure generator may be activated during said first time period, i.e. when the retarder device is connected to the power-train with the rotor co-rotating, or after the retarder device has been disconnected from the power-train but with the rotor still rotating, due to its inertia, and before the rotor's engine speed has dropped to zero.

By reducing the pressure in the retarder device, the water in the retarder device will quickly transform into vapour and be evacuated.

Vaporisation is achieved because the pressure in the enclosed workspace, defined by the stator and the rotor, is reduced to the vapour pressure, or to a pressure below the vapour pressure. Thus the shovel space is evacuated of liquid water and coolant, respectively, and mechanical connectivity/disconnectivity of the retarder device is made possible with comfort maintained, and with the use of a clutch device comprising uncomplicated clutch components. This is a great advantage, since the retarder device becomes connectible and disconnectable without that the risk of air coming into contact with the coolant and resulting in an adverse impact on other components in the vehicle, with which the coolant comes into contact.

Furthermore, since this is brought to occur already during a time period when the rotor is rotating, in a phase when the in-flow of working medium to the workspace has been shut off, several advantages are achieved. One advantage is that the associated clutch is nearly free from load, which reduces wear and necessary manoeuvring force when it is pulled apart.

Since the rotor rotates, this rotation contributes to a significant reduction of the workspace's liquid content, since the many pocket-like sub-areas of the workspace, defined by the shovel system, already for this reason may be emptied relatively efficiently of working medium, by way of the retarder device's own pumping action. The remaining amount of working medium remaining inside the workspace is evacuated with the help of the connection of the negative pressure generator, and the associated necessary evaporation thereby becomes lesser than if the evacuation phase were initiated only at a connection to the power-train, with a retarder device at a standstill, out of operation. Additionally, the rotation of the rotor contributes to liquid in the pocket-like areas being more easily evacuated at the arising evaporation. Thus, the negative pressure generator only needs to be dimensioned for this residual amount of working medium, and need not necessarily be able to evacuate larger amounts of working medium in a very short time. This entails a better economy, reduced dimensions, limited space requirement and improved total efficiency at the vaporisation.

According to the invention, the workspace is thus subsequently maintained in an evacuated state during a second time period, when the retarder device is disconnected up to and including a subsequent connection for initiation of braking operation.

The retarder device's acceleration torque at the connection is thus, through the invention, reduced in order to be level with or lower than the corresponding acceleration torque for an oil retarder device.

Through the invention, the significant advantage is achieved that the connection to the power-train may occur directly, without the workspace having to be subject to a prior evacuation phase. This ensures an advantageously short connecting time, which increases the retarder device's efficiency and usefulness. Further, loads arising on the connecting device are reduced, which in turn leads to reduced requirements at the dimensioning of component parts and to an extended life of component parts, respectively.

The time to carry out a pressure reduction for evacuation of the retarder device before initiation of a connection is otherwise estimated to be in the range of 0.3 - 0.5 seconds. Thanks to the invention, this expenditure of time before the retarder device is connected to the power-train may thus now be avoided, or at least substantially reduced.

A control circuit for control of the evacuation process, by way of control of said valve elements for shutting off the flow of working medium to the workspace, and of the negative pressure generator, is preferably comprised in the retarder device. This control circuit is suitably a part of the vehicle's control system, and consists of a set of control algorithms.

Preferably, the negative generator is initiated to evacuate the working medium from the workspace also during the second time period, in order thus to evacuate any potential working medium leaking in during the operation of the vehicle, with the retarder device disconnected.

It is preferable for a control valve to be arranged in the control circuit downstream of the workspace, in order to provide for a possibility of controlling the braking torque applied by the retarder device. It is preferred to have a one-way valve arranged inside the retarder circuit in connection with the control valve, in order to prevent back-flow. This one-way valve may be separate from or integrated with the control valve.

The negative pressure generator may be connected with the retarder circuit downstream as well as upstream of the workspace, and also directly with the workspace.

In some embodiments, the negative pressure generator is connected to the retarder circuit via an inlet valve, and to said coolant circuit via an exhaust conduit. Either, or each of the inlet conduit and the exhaust conduit, may thus need to be equipped with a one-way valve.

It is preferred for the negative pressure generator to be one from a group comprising: a piston cylinder pump, a negative pressure container possible to pre-charge with negative pressure, a rotation pump. These devices may be installed to act at the required speed, so that in particular the insertion of a negative pressure container possible to pre-charge, which is constantly ready and directly switchable through a valve, entails a high degree of speed in an uncomplicated manner. With the use of a negative pressure container that may be pre-charged as a negative pressure generator, the inlet conduit need not be equipped with a one-way valve. Neither does any exhaust conduit need to be installed.

A method according to the invention for the operation of a hydrodynamic retarder device according to the above, for connection and disconnection to a power-train in a vehicle, comprises: provision of a water containing working medium to a workspace comprised in a shovel system, formed by a shovel equipped stator and a shovel equipped rotor, control of in-flow of working medium to the workspace from a retarder circuit connected to the workspace, wherein the retarder circuit is connected to the vehicle's ordinary coolant circuit, and connection and disconnection of the retarder device to/from said power-train. The method is characterised by reducing the vapour pressure to or below the vapour pressure for the working medium, in order to vacate the workspace of liquid working medium before a disconnection of the retarder device from the power-train, by shutting off the flow of the working medium to the workspace while allowing for an outflow therefrom during a first time period, when the retarder device is connected to the power-train with the rotor in rotation, and subsequently to activate a negative pressure generator connected to the workspace during the rotor's continued rotation, to keep the valve element closed and the workspace in an evacuated state during a second time period, when the retarder device is disconnected from the power-train, and during a subsequent, third time period for reconnection of the retarder device to the power-train for subsequent braking operation.

The advantages specified above for the corresponding device characteristics, are also achieved with the innovative method.

It is preferable for the working medium to be evacuated from the workspace also during the second time period, wherein the working medium is preferably evacuated from the workspace during the second time period at one from among the group: at selected time intervals, at detection of a certain amount of working medium having leaked into the shovel system, just before connection. In case evacuation is initiated at detection of a certain amount of working medium having leaked into the shovel system, this may relate to a certain level according to a level sensor. This may be a direct or an indirect amount of working medium having leaked inside, whereat the amount may be detected indirectly, e.g. by way of values specified by a pressure or level sensor being placed inside, or in connection with, the expansion tank. In case evacuation is initiated at selected time intervals, these may be predetermined or recalculated on a recurrent basis by self-learning systems, according to the results of the previous evacuation. In case the evacuation is initiated just before the connection, this is, as a rule, a very brief and quickly completed method, thanks to the workspace being "basically evacuated" through the invention.

Preferably, a flow of working medium to the workspace is controlled through a control valve, arranged in a control circuit downstream of the workspace.

It is also preferred that the flow of working medium from the control valve to the workspace is prevented by a one-way valve, arranged in the control circuit in connection with the control valve.

The invention also relates to a vehicle, comprising a retarder device according to the above.

### Description of drawings

The invention will now be described in further detail based on the example embodiments and with reference to the enclosed drawings, on which:
Fig. 1 schematically shows a commercial vehicle equipped with a retarder device according to the invention,
Fig. 2 shows a diagram of a retarder device according to the invention,
Figs. 3 and 4 show in simplified form two operating modes for a retarder device according to the invention, and
Fig. 5 schematically shows a sequence of a method according to the invention in the form of a simple block diagram.

### Description of example embodiments

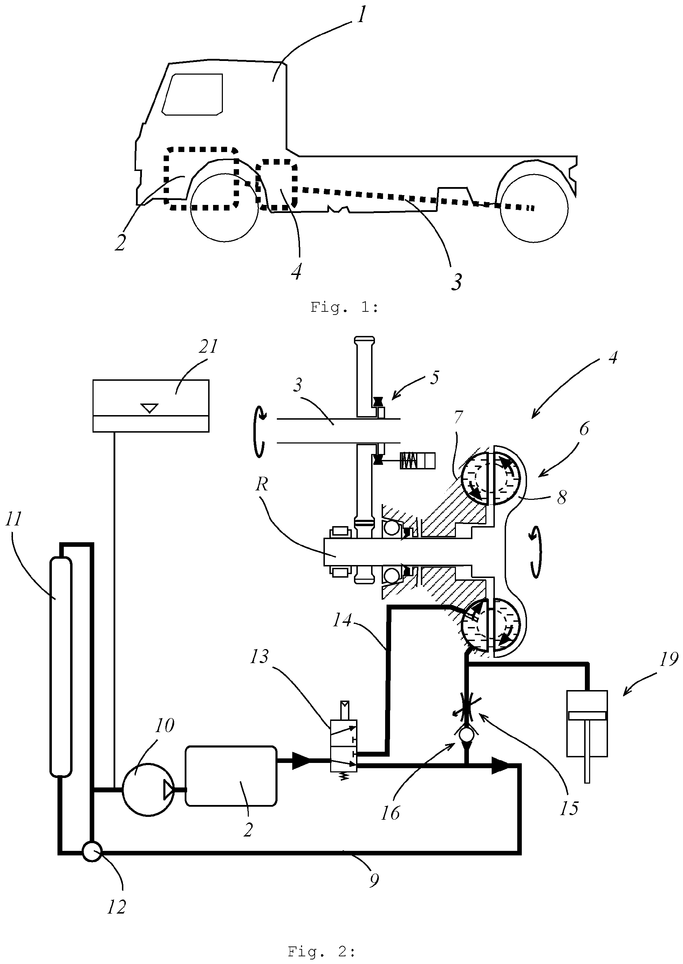

The commercial vehicle 1 shown in Fig. 1 is of the type comprising an engine 2, a power-train 3 and a retarder device 4, which may be connected and disconnected.

The basic structure of a retarder device 4 is shown in Fig. 2, wherein a clutch device 5 is arranged for connection and disconnection of the retarder device 4 to the vehicle's power-train 3. The retarder device 4 has a stator 7 and a rotor 8, which is rotatable around a shaft R.

Together, the stator 7 and the rotor 8 form a shovel system with a workspace 6, in which a greater or lesser amount of fluid is designed to be hurled around, in order to function as a working medium in the operation of the retarder device, so that energy absorbed by the retarder device transforms into heat. This heat is cooled off by the vehicle's ordinary cooling system, which comprises a coolant circuit 9, a water pump 10, a front cooler 11, an expansion tank 21 and a thermostat 12.

A valve device in the form of a directional valve 13 inserted in the coolant circuit 9 is installed to lead coolant as a working medium to the shovel system's workspace 6, and to shut off the flow to the workspace 6, respectively. From the directional valve 13, a retarder circuit 14 leads to an area in the workspace 6 where a lower pressure prevails during operation, and where coolant may be added as a working medium. The retarder circuit 14 is also, for the outlet of working medium from the workspace, connected to a peripheral area of the workspace 6, in which a higher pressure may be expected during operation and where outflow of the working medium may occur.

Downstream of the workspace 6, the retarder circuit passes through a control valve 15, with whose help the pressure in the workspace, and as a result thereof the amount of working medium in the workspace, is adjustable.

Further, downstream of the control valve 15, a one-way valve 16 is arranged, allowing for a flow of the working medium from the workspace 6, but preventing flow in the opposite direction.

Downstream of the workspace in the retarder circuit 14 and upstream of the control valve 15, a negative pressure circuit is connected, including a negative pressure generator 19, here displayed in the form of a piston cylinder device 19.

To the extent the negative pressure generator 19 is of a type that operates with several strokes, a one-way valve may, where needed, be installed in its inlet conduit and its outlet conduit, respectively (not shown in the figure).

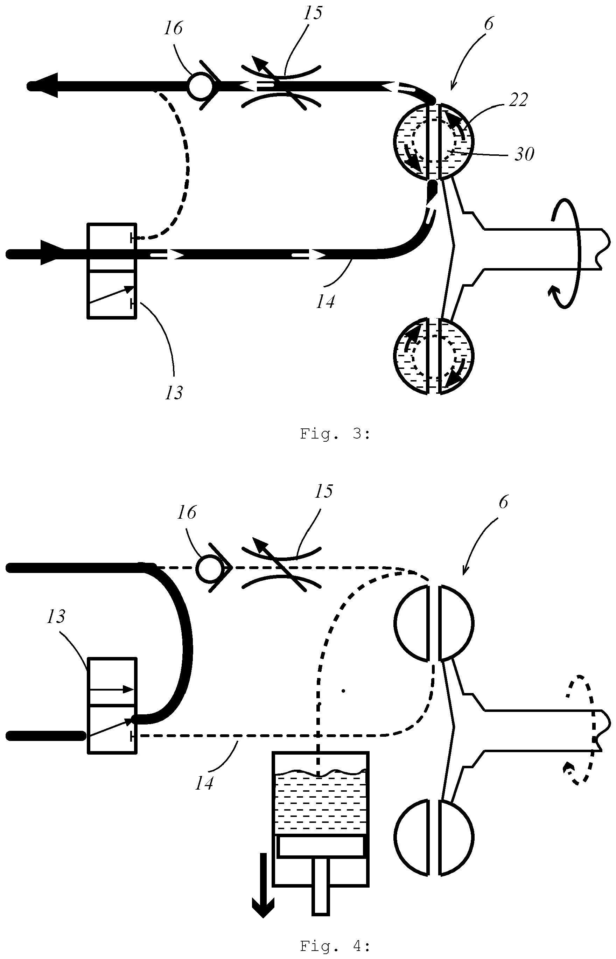

Fig. 3 illustrates an operating mode, which is characterised as normal braking, and wherein all available cooling water/coolant is permitted to enter as a working medium into the retarder device's workspace 6 through the directional valve 13. As indicated in Fig. 3, in this operating mode a fluid amount 22 is active within the shovel system, and this fluid amount will during operation be imparted a rotating movement, according to the arrows inside the workspace 6.

At this operation, it is possible to control the braking torque by changing the pressure in the workspace, and thus the fluid amount, through adjustment of the control valve 15.

In this way, the amount of fluid that is impacted within the shovel system will thus change, entailing that an inner space 30 becomes larger or smaller.

Overall, it may be said that in this operating mode the maximum braking action of the retarder device may be obtained.

At fig 4, an operating mode is illustrated where the retarder device must be connected or disconnected from the vehicle's power-train mechanically. As described above, this requires low drag torque for the retarder device, to avoid uncomfortable jerks.

Such low drag torque is achieved, on the one hand, by of the retarder circuit 14 being disconnected from the cooling water circuit, and, on the other, by ensuring that the workspace 6 is subjected to such a negative pressure that water vapour is formed for evacuation of water from the workspace 6. Furthermore, according to the invention, the rotation of the retarder device's rotor is used to vacate the workspace. This happens by way of shutting off the retarder circuit 14 from the coolant circuit, already during a first time period when the retarder device is connected with the rotating rotor. This ensures that already at this stage a negative pressure generating water vapour is created in the workspace, which in a surprisingly efficient way achieves a relatively complete cleaning of working medium from the very irregularly shaped workspace. During a period when the rotor rotates, because it is still connected or because it rotates after disconnection due to its inertia, the negative pressure generator 19 is also activated to increase the negative pressure in the workspace, and thus increase the vapour generation, so that the workspace is substantially completely evacuated of working medium.

Furthermore, according to the invention, the valve element is kept closed and the workspace is kept in an evacuated state during a second time period, when the retarder device 4 is disconnected from the power-train 3, and during a subsequent, third time period for reconnection of the retarder device 4 to the power-train 3 for subsequent braking operation.

In other respects, the functioning of the operating mode according to Fig. 4 is understood through the previous description in connection with Fig. 2.

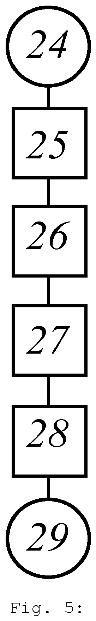

One sequence of a method according to the invention is illustrated schematically through the block diagram in Fig. 5.

Position 24 relates to the start of the sequence with operation of a vehicle, with the retarder device idling and connected to the power-train.

Position 25 relates to disconnection of supply of working medium from the coolant circuit to the retarder device's workspace, while allowing out-flow, during the continued rotation of the rotor, and subsequent connection of the negative pressure generator during the rotor's continued rotation.

Position 26 relates to disconnection of the retarder device from the power-train.

Position 27 relates to keeping the retarder device evacuated during a time period when it is disconnected from the power-train.

Position 28 relates to connection of the evacuated retarder device to the vehicle's power-train, while the flow to the retarder device is still shut off.

Position 29 relates to readjustment of the directional valve and the control valve, for the desired braking action and the end of the sequence.

The sequence steps may be partly in a different order than set out above.

Significant advantages are achieved through the invention. As specified above, thanks to the invention, the expenditure of time before the retarder device is connected to the power-train may thus be avoided, or at least substantially reduced. Additionally, a general advantage is that through the invention, only one single system with liquid that has to be cooled is required for the vehicle. A vehicle equipped with a retarder device according to the invention becomes therefore e.g. lighter and less costly to produce, and also entails an environmental improvement compared to prior art. Since the retarder device may additionally be disconnected from the vehicle's power-train without any problems, the vehicle's driving economy is improved. The drag losses from a co-rotating retarder device would otherwise negatively impact the vehicle's fuel consumption.

As an alternative to the negative pressure generator displayed on the drawings, other types of "suction devices" may be used, such as a fast-acting pump device. A preferred alternative is to provide a vessel which may be pre-charged with a negative pressure, which vessel is connected, where needed, to the retarder circuit.

It has become evident that a desired negative pressure is in the range of 0.5 bar below atmospheric pressure, since the vapour pressure at a normal working temperature amounts to approximately this value. Application of greater negative pressure is not ruled out, however, since this may be needed at lower temperatures because of the vapour pressure's temperature dependency.

A retarder device according to the invention may comprise a shovel-equipped stator in order to, together with a shovel-equipped rotor, form the shovel system with its workspace. According to the invention, the retarder device may also comprise more than one shovel-equipped stator, interacting with corresponding more than one shovel-equipped rotor, to form the shovel system with its workspace.

## Claims

1. Hydrodynamic retarder device (4), for connection and disconnection to a power-train (3) in a vehicle (1), wherein the retarder device comprises:
- at least one shovel equipped stator (7), which, together with at least one shovel equipped rotor (8), forms a shovel system with a workspace (6) for receipt of an aqueous working medium,
- a retarder circuit (14) connected to the workspace (6), in order to control the inflow of working medium to the workspace (6), wherein the retarder circuit (14) is arranged to be connected to the vehicle's ordinary coolant circuit (9), and
- a clutch device for connection and disconnection of said retarder device (4) to/from said power-train (3),
**characterised in that**
- the retarder device is arranged to ensure that the pressure in the workspace (6) is decreased to or below the vapour pressure for the working medium, in order to vacate the workspace of liquid working medium in connection with a disconnection of the retarder device from the power-train by way of:
i) initiating a valve element (13) arranged in the retarder circuit (14) to shut off the inflow of working medium to the workspace (6), while allowing an out-flow therefrom, during a first time period when the retarder device (4) is connected to the power-train (3) while the rotor continues to rotate, and
ii) to subsequently activate a negative pressure generator (19) connected to the workspace, during the continued rotation of the rotor,
- to keep the valve element closed and the workspace in an evacuated state during a second time period, when the retarder device (4) is disconnected from the power-train (3), and during a subsequent, third time period for reconnection of the retarder device (4) to the power-train (3) for subsequent braking action.

2. Retarder device according to claim 1, **characterised by** a control circuit for control of the negative pressure generator.

3. The retarder device according to claim 2, **characterised in that** the control circuit is arranged to initiate the negative pressure generator, in order to evacuate working medium from the workspace (6) also during the second time period.

4. Retarder device according to any of the previous claims, **characterised in that** a control valve (15) is arranged in the control circuit downstream of the workspace.

5. Retarder device according to any of the previous claims, **characterised in that** the negative pressure generator (19) is connected to the retarder circuit (14) downstream or upstream of the workspace (6), or directly to the workspace (6).

6. Retarder device according to any of the previous claims, **characterised in that** the negative pressure generator (19) is one from among a group including: a piston-cylinder pump, a negative pressure container possible to pre-charge with a negative pressure, a rotation pump.

7. Method for operation of a hydrodynamic retarder device (4) for connection and disconnection to a power-train (3) in a vehicle (1), wherein the method comprises:
- provision of an aqueous working medium to a workspace (6), comprised in a shovel system formed by a shovel equipped stator (7) and a shovel equipped rotor (8),
- control of the inflow of the working medium to the workspace (6) from a retarder circuit (14) connected to the workspace, wherein the retarder circuit (14) is connected to the vehicle's ordinary coolant circuit (9), and
- connection and disconnection of the retarder device (4) to/from said power-train (3),
**characterised in that**
- the pressure in the workspace (6) is reduced to or below the vapour pressure for the working medium, in order to vacate the workspace of liquid working medium before a disconnection of the retarder device from the power-train by way of:
I) shutting off (13) the inflow of working medium to the workspace (6), while allowing an out-flow therefrom during a first time period, when the retarder device (4) is connected to the power-train (3) with the rotor rotating, and
ii) subsequently activating a negative power generator (19) connected to the workspace during the rotor's continued rotation,
- the valve element is kept closed and the workspace is kept in an evacuated state during a second time period, when the retarder device (4) is disconnected from the power-train (3), and during a subsequent, third time period for reconnection of the retarder device (4) to the power-train (3) for subsequent braking operation.

8. Method according to claim 7, **characterised in that** the working medium is evacuated from the workspace (6) by way of activating the negative pressure generator (19) also during the second time period.

9. Method according to claim 8, **characterised in that** the working medium is evacuated from the workspace (6) by way of activating the negative pressure generator (19) also during the second time period, at one from among the group: at selected time intervals, at the detection of a certain amount of working medium having leaked into the shovel system, just before connection.

10. Method according to any of claims 7-9, **characterised in that,** at braking operation, a flow of working medium to the workspace is controlled by way of a control valve (15), arranged in the control circuit downstream of the workspace.

11. Method according to claim 10, **characterised in that** the flow of working medium from the control valve (15) to the workspace is prevented by a one way valve (16), arranged in the control circuit in connection with the control valve (15).

12. Vehicle comprising a retarder device according to any of claims 1-6.

## Patentansprüche

1. Hydrodynamische Retarder-Vorrichtung (4) zum Verbinden mit und Trennen von einem Antriebsstrang (3) in einem Fahrzeug (1), wobei die Retarder-Vorrichtung umfasst:
- wenigstens einen mit einer Schaufel ausgerüsteten Stator (7), welcher zusammen mit wenigstens einem mit einer Schaufel ausgerüsteten Rotor (8) ein Schaufelsystem mit einem Arbeitsbereich (6) zum Empfangen eines wässrigen Arbeitsmediums bildet,
- einen mit dem Arbeitsbereich (6) verbundenen Retarder-Kreislauf (14) zum Steuern des Zuflusses an Arbeitsmedium zu dem Arbeitsbereich (6), wobei der Retarder-Kreislauf (14) so angeordnet ist, dass dieser mit dem gewöhnlichen Kühlflüssigkeitskreislauf (9) des Fahrzeugs verbunden ist, und
- eine Kupplungsvorrichtung zum Verbinden und Trennen der Retarder-Vorrichtung (4) mit/von dem Arbeitsstrang (3),
**dadurch gekennzeichnet, dass**
- die Retarder-Vorrichtung zum Bewirken einer Verringerung des Drucks in dem Arbeitsbereich (6) bis zu oder unter den Dampfdruck für das Arbeitsmedium angeordnet ist, damit der Arbeitsbereich von wässrigem Arbeitsmedium verbunden mit einem Trennen der Retarder-Vorrichtung von dem Antriebsstrang (3) entleert wird durch:
i) Auslösen, während einer ersten Zeitdauer, wenn die Retarder-Vorrichtung (4) mit dem Antriebsstrang (3) verbunden ist, eines in dem Retarder-Kreislauf (14) angeordneten Ventilelements (13) zum Abdrehen des Zuflusses von Arbeitsmedium zu dem Arbeitsbereich (6), während eines Erlaubens eines Ausströmens von diesem, und
ii) anschließendes Aktivieren, während der fortgesetzten Rotation des Rotors, eines mit dem Arbeitsbereich verbundenen Unterdruckgenerators (19),
- um während einer zweiten Zeitdauer das Ventilelement geschlossen und den Arbeitsbereich in einem entleerten Zustand zu halten, wenn die Retarder-Vorrichtung (4) von dem Antriebsstrang (3) getrennt ist, und
während einer anschließenden dritten Zeitdauer für eine erneute Verbindung der Retarder-Vorrichtung (4) zu dem Antriebsstrang (3) für eine anschließende Bremsaktion.

2. Retarder-Vorrichtung nach Anspruch 1, **gekennzeichnet durch** einen Steuerschaltkreis zum Steuern des Unterdruckgenerators.

3. Retarder-Vorrichtung nach Anspruch 2, **dadurch gekennzeichnet, dass** der Steuerschaltkreis zum Starten des Unterdruckgenerators angeordnet ist, um Arbeitsmedium von dem Arbeitsbereich (6) auch während der zweiten Zeitdauer abzutransportieren.

4. Retarder-Vorrichtung nach einem der vorangegangenen Ansprüche, **dadurch gekennzeichnet, dass** ein Steuerventil (15) in dem Steuerschaltkreis stromabwärts des Arbeitsbereichs angeordnet ist.

5. Retarder-Vorrichtung nach einem der vorangegangenen Ansprüche, **dadurch gekennzeichnet, dass** der Unterdruckgenerator (19) mit dem Retarder-Kreislauf (14) stromabwärts oder stromaufwärts von dem Arbeitsbereich (6), oder direkt mit dem Arbeitsbereich (6) verbunden ist.

6. Retarder-Vorrichtung nach einem der vorangegangenen Ansprüche, **dadurch gekennzeichnet, dass** der Unterdruckgenerator (19) eine Komponente aus einer Gruppe ist, die umfasst: eine Kolben-Zylinder-Pumpe, einen Behälter mit Unterdruck, der mit einem Unterdruck vorgeladen werden kann, eine Rotationspumpe.

7. Verfahren zum Bedienen einer hydrodynamischen Retarder-Vorrichtung (4) zum Verbinden mit und Trennen von einem Antriebsstrang (3) in einem Fahrzeug (1), wobei das Verfahren umfasst:
- Bereitstellen eines wässrigen Arbeitsmediums an einen Arbeitsbereich (6), das in einem Schaufelsystem umfasst ist, welches durch einen mit einer Schaufel ausgerüsteten Stator (7) und einen mit einer Schaufel ausgerüsteten Rotor (8) gebildet ist,
- Steuern des Zuflusses des Arbeitsmediums zu dem Arbeitsbereich (6) von einem mit dem Arbeitsbereich verbundenen Retarder-Kreislauf (14),
wobei der Retarder-Kreislauf (14) mit dem gewöhnlichen Kühlflüssigkeitskreislauf (9) des Fahrzeugs verbunden ist, und
- Verbinden und Trennen der Retarder-Vorrichtung (4) mit/von dem Antriebsstrang (3),
**dadurch gekennzeichnet, dass**
- der Druck in dem Arbeitsbereich (6) bis oder unter den Dampfdruck des Arbeitsmediums verringert wird, damit der Arbeitsbereich von flüssigem Arbeitsmedium vor einer Trennung der Retarder-Vorrichtung von dem Antriebsstrang entleert wird durch:
i) Abdrehen (13) des Zuflusses von Arbeitsmedium zu dem Arbeitsbereich (6) während eines Erlaubens eines Abflusses von diesem, wenn die Retarder-Vorrichtung (4) mit dem Antriebsstrang (3) mit dem rotierenden Rotor verbunden wird,
ii) anschließendes Aktivieren, während der fortgesetzten Rotation des Rotors, eines mit dem Arbeitsbereich verbundenen Unterdruckgenerators (19),
- wobei das Ventilelement geschlossen gehalten wird und der Arbeitsbereich in einem entleerten Zustand während einer zweiten Zeitperiode gehalten wird, wenn die Retarder-Vorrichtung (4) von dem Antriebsstrang (3) getrennt wird,
und während einer anschließenden dritten Zeitperiode für eine erneute Verbindung der Retarder-Vorrichtung (4) mit dem Antriebsstrang (3) für eine nachfolgende Bremsbedienung.

8. Verfahren nach Anspruch 7, **dadurch gekennzeichnet, dass** das Arbeitsmedium von dem Arbeitsbereich (6) durch Aktivieren des Unterdruckgenerators (19) auch während der zweiten Zeitdauer entleert wird.

9. Verfahren nach Anspruch 8, **dadurch gekennzeichnet, dass** das Arbeitsmedium von dem Arbeitsbereich (6) durch Aktivieren des Unterdruckgenerators (19) auch während der zweiten Zeitdauer abgeführt wird, bei einem Merkmal aus der Gruppe von: bei ausgewählten Zeitintervallen, bei der Erkennung einer bestimmten Menge an Arbeitsmedium, das kurz vor der Verbindung in das Schaufelsystem entwichen ist.

10. Verfahren nach einem der Ansprüche 7 bis 9, **dadurch gekennzeichnet, dass** bei einer Bremsanwendung ein Arbeitsmediumsstrom zu dem Arbeitsbereich durch ein Steuerventil (15) gesteuert wird, das in dem Steuerkreislauf stromabwärts des Arbeitsbereichs angeordnet ist.

11. Verfahren nach Anspruch 10, **dadurch gekennzeichnet, dass** der Arbeitsmediumsstrom von dem Steuerventil (15) zu dem Arbeitsbereich durch ein Einwegventil (16) verhindert wird, das in dem Steuerkreislauf in Verbindung mit dem Steuerventil (15) angeordnet ist.

12. Fahrzeug, umfassend eine Retarder-Vorrichtung nach einem der Ansprüche 1 bis 6.

## Revendications

1. Dispositif ralentisseur hydrodynamique (4), pour la connexion et la déconnexion à une chaîne cinématique (3) dans un véhicule (1), dans lequel le dispositif ralentisseur comprend :
- au moins un stator (7) équipé d'une pelle, qui, conjointement avec au moins un rotor (8) équipé d'une pelle, forme un système de pelle avec un espace de travail (6) pour la réception d'un milieu de travail aqueux,
- un circuit ralentisseur (14) connecté à l'espace de travail (6), afin de commander le flux entrant de milieu de travail à l'espace de travail (6), dans lequel le circuit ralentisseur (14) est agencé pour être connecté au circuit de refroidissement ordinaire du véhicule (9), et
- un dispositif d'embrayage pour la connexion et la déconnexion dudit dispositif ralentisseur (4) à/de ladite chaîne cinématique (3),
**caractérisé en ce que**
- le dispositif ralentisseur est agencé pour assurer que la pression dans l'espace de travail (6) est diminuée ou inférieure à la pression de vapeur pour le milieu de travail, afin de libérer l'espace de travail de milieu de travail liquide en relation avec une déconnexion du dispositif ralentisseur de la chaîne cinématique par :
i) déclenchement d'un élément de soupape (13) agencé dans le circuit ralentisseur (14) pour arrêter le flux entrant de milieu de travail à l'espace de travail (6), tout en permettant un flux sortant de là, pendant une première période de temps lorsque le dispositif ralentisseur (4) est connecté à la chaîne cinématique (3) pendant que le rotor continue de tourner, et
ii) pour activer subséquemment un générateur de pression négative (19) connecté à l'espace de travail, pendant la rotation continue du rotor,
- pour maintenir l'élément de soupape fermé et l'espace de travail dans un état évacué pendant une deuxième période de temps, lorsque le dispositif ralentisseur (4) est déconnecté de la chaîne cinématique (3), et pendant une troisième période de temps subséquente pour la reconnexion du dispositif ralentisseur (4) à la chaîne cinématique (3) pour une action de freinage subséquente.

2. Dispositif ralentisseur selon la revendication 1, **caractérisé par** un circuit de commande pour la commande du générateur de pression négative.

3. Dispositif ralentisseur selon la revendication 2, **caractérisé en ce que** le circuit de commande est agencé pour déclencher le générateur de pression négative, afin d'évacuer le milieu de travail de l'espace de travail (6) aussi pendant la deuxième période de temps.

4. Dispositif ralentisseur selon l'une quelconque des revendications précédentes, **caractérisé en ce qu'**une soupape de commande (15) est agencée dans le circuit de commande en aval de l'espace de travail.

5. Dispositif ralentisseur selon l'une quelconque des revendications précédentes, **caractérisé en ce que** le générateur de pression négative (19) est connecté au circuit ralentisseur (14) en aval ou en amont de l'espace de travail (6), ou directement à l'espace de travail (6).

6. Dispositif ralentisseur selon l'une quelconque des revendications précédentes, **caractérisé en ce que** le générateur de pression négative (19) est un parmi un groupe comprenant : une pompe à piston-cylindre, un récipient à pression négative pouvant être préchargé avec une pression négative, une pompe de rotation.

7. Procédé d'actionnement d'un dispositif ralentisseur hydrodynamique (4) pour la connexion et la déconnexion à une chaîne cinématique (3) dans un véhicule (1), dans lequel le procédé comprend :
- la fourniture d'un milieu de travail aqueux à un espace de travail (6), compris dans un système de pelle formé par un stator (7) équipé d'une pelle et d'un rotor (8) équipé d'une pelle,
- la commande du flux entrant du milieu de travail à l'espace de travail (6) depuis un circuit ralentisseur (14) connecté à l'espace de travail, dans lequel le circuit ralentisseur (14) est connecté au circuit de refroidissement ordinaire du véhicule (9), et
- la connexion et la déconnexion du dispositif ralentisseur (4) à/de ladite chaîne cinématique (3),
**caractérisé en ce que**
- la pression dans l'espace de travail (6) est réduite ou inférieure à la pression de vapeur pour le milieu de travail, afin de libérer l'espace de travail de milieu de travail liquide avant une déconnexion du dispositif ralentisseur de la chaîne cinématique par :
I) arrêt (13) du flux entrant de milieu de travail à l'espace de travail (6), tout en permettant un flux sortant de là pendant une première période de temps, lorsque le dispositif ralentisseur (4) est connecté à la chaîne cinématique (3) avec le rotor en rotation, et
ii) activation subséquente d'un générateur de pression négative (19) connecté à l'espace de travail, pendant la rotation continue du rotor,
- l'élément de soupape est maintenu fermé et l'espace de travail est maintenu dans un état évacué pendant une deuxième période de temps, lorsque le dispositif ralentisseur (4) est déconnecté de la chaîne cinématique (3), et pendant une troisième période de temps subséquente pour la reconnexion du dispositif ralentisseur (4) à la chaîne cinématique (3) pour une action de freinage subséquente.

8. Procédé selon la revendication 7, **caractérisé en ce que** le milieu de travail est évacué de l'espace de travail (6) par activation du générateur de pression négative (19) également pendant la deuxième période de temps.

9. Procédé selon la revendication 8, **caractérisé en ce que** le milieu de travail est évacué de l'espace de travail (6) par activation du générateur de pression négative (19) également pendant la deuxième période de temps, à un parmi le groupe : à des intervalles de temps sélectionnés, à la détection d'une certaine quantité de milieu de travail ayant fui dans le système de pelle, juste avant connexion.

10. Procédé selon l'une quelconque des revendications 7-9, **caractérisé en ce que**, à l'opération de freinage, un flux de milieu de travail à l'espace de travail est commandé par le biais d'une soupape de de commande (15), agencée dans le circuit de commande en aval de l'espace de travail.

11. Procédé selon la revendication 10, **caractérisé en ce que** le flux de milieu de travail de la soupape de commande (15) à l'espace de travail est empêché par une soupape unidirectionnelle (16), agencée dans le circuit de commande en connexion avec la soupape de commande (15).

12. Véhicule comprenant un dispositif ralentisseur selon l'une quelconque des revendications 1-6.
